# FASCICULE DE BREVET EUROPEEN

(11) **EP 0 881 809 B1**
(45) Date de publication et mention de la délivrance du brevet: **08.03.2006**
(21) Numéro de dépôt: 98401136.1
(22) Date de dépôt: 12.05.1998
(51) Int. Cl.: H04L 29/06, H04L 12/413

(54) **Procédé et dispositif de validation/invalidation d'un message émis sur un réseau de transmission d'informations par réponse dans une trame de communication**
Verfahren und Vorrichtung zur Erklärung der Gültigkeit/Ungültigkeit in einem Rahmen einer über ein Übertragungsnetz als Antwort gesendeten Nachricht
Method and apparatus for validation/invalidation of a message frame sent as a response on a communication network

(30) Priorité: 27.05.1997 FR 9706479
(43) Date de publication de la demande: 02.12.1998
(73) Titulaire: AUTOMOBILES PEUGEOT, 75116 Paris (FR); AUTOMOBILES CITROEN, 92200 Neuilly-sur-Seine (FR)
(72) Inventeur: Martin, Paul, 78750 Mareil Marly (FR); Kaag, François, 25700 Valentigney (FR)
(74) Mandataire: Habasque, Etienne J. Jean-François

(56) Documents cités:
- EP-A- 0 328 435
- EP-A- 0 570 338
- US-A- 5 303 348

## Description

La présente invention concerne un procédé de validation/invatidation d'un message émis sur un réseau de transmission d'informations et un réseau correspondant

Plus particulièrement, la présente invention concerne un procédé de validation d'un message émis sur un réseau, par réponse dans une trame de communication, entre au moins deux stations reliées à ce réseau, le message comportant au moins un champ d'en-tête émis par une première station et un champ de données émis par une seconde station.

On connaît déjà dans l'état de la technique, comme exemple par le document EP-0 328 435, des procédés et des réseaux de transmission de ce type qui sont également appelés procédés et dispositifs de réponse dans une trame de communication et qui consistent en ce qu'au moins une des stations accède au réseau, pour transmettre un début de trame de message, encore appelé champ d'en-tête, et en ce qu'en fonction de ce champ d'en-tête du message, une autre station accède au réseau pour transmettre la fin de la trame de message contenant notamment une inforrnation d'événement ou de donnée de cette station, cette fin de trame étant également appelée de façon générale champ de données.

Cependant, ces procédés et dispositifs posent un certain nombre de problèmes notamment concernant la mise à jour et la transmission du champ de données.

En effet, l'instant d'émission des données n'est pas contrôlé par la station produisant les données, mais par celle souhaitant les obtenir.

Si la station produisant les données souhaite mettre celles-ci à jour, il existe alors un risque que cette mise à jour intervienne au cours de la transmission de celles-ci sur le réseau, si cette mise à jour à lieu entre-temps.

Le risque est alors que la station correspondante transmette des informations incohérentes entre elles, les unes ayant été mises à jour et les autres non.

Pour tenter de résoudre ce problème, on a déjà proposé dans l'état de la technique, d'adjoindre au champ de données, par exemple en début de celui-ci, un marqueur de validité.

Ce marqueur est alors établi à une certaine valeur avant toute mise à jour de ces données, puis établi à une autre valeur une fois la mise à jour effectuée.

Une station lisant ces données peut alors par analyse de ce marqueur, déterminer si ces données sont ou non en cours de modification et de mise à jour et si elles doivent donc être considérées comme valides ou invalides.

Cependant, ce mécanisme est insuffisant, car il ne permet pas de résoudre le problème de la transmission d'un champ de données incohérentes, notamment lorsque la mise à jour se déclenche alors que les données sont en cours de transmission.

Le but de l'invention est donc de résoudre ces problèmes.

A cet effet, l'invention a pour objet un procédé de validation/invalidation d'un message émis sur un réseau de transmission d'informations par réponse dans une trame de communication, entre au moins deux stations reliées à ce réseau, le message comportant au moins un champ d'entête émis par une première station et un champ de données émis par une seconde station, caractérisé en ce qu'il comporte :
- une étape d'émission par la seconde station d'un champ de données comportant un marqueur de fin de champ et un marqueur de début de champ ;
- une étape de rnodification, de façon correspondante, respectivement au début et à la fin d'une opération de mise à jour du reste du champ de données, de ces marqueurs, par la seconde station ; et
- une étape de comparaison, par une station raccordée au réseau et lisant le message, des deux marqueurs, pour valider le message en cas de correspondance entre ces marqueurs et invalider celui-ci en cas de discordance entre ceux-ci.

Selon un autre aspect, l'invention a également pour objet un réseau de transmission d'informations correspondant.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant un réseau de transmission d'informations entre au moins deux stations;
- la Fig.2 représente un message utilisant un procédé de réponse dans une trame de communication, de l'état de la technique;
- la Fig.3 illustre un message utilisant un procédé de réponse dans une trame de communication, dans lequel sont intégrés des marqueurs utilisables dans un procédé de validation/invalidation selon l'invention;
- les Fig.4 et 5 représentent des organigrammes illustrant un procédé de validation/invalidation selon l'invention; et
- la Fig.6 représente un schéma synoptique illustrant la structure d'un dispositif pour la mise en oeuvre d'un procédé selon l'invention.

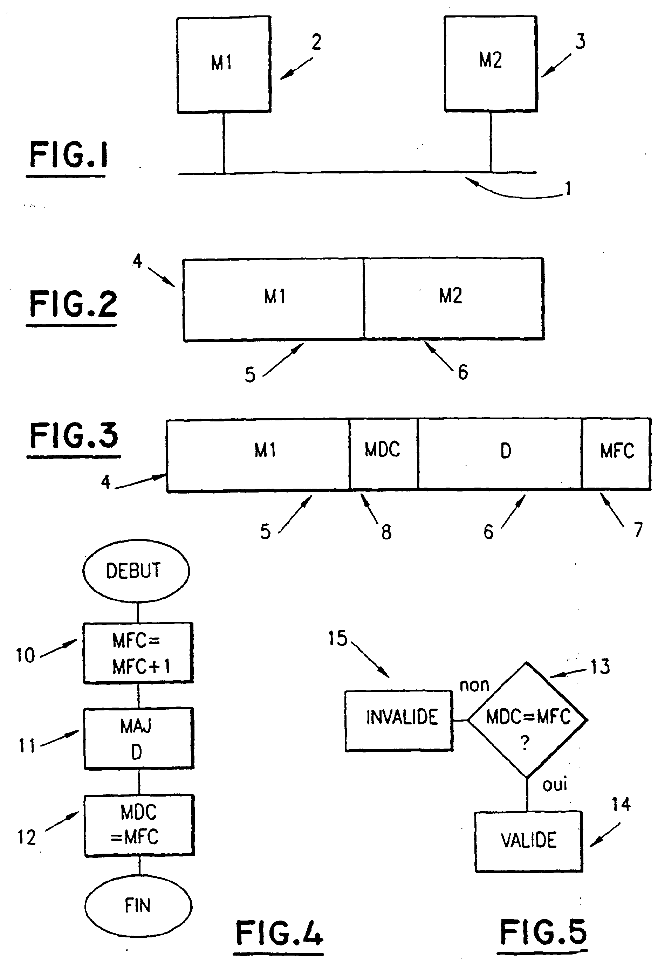

On reconnaît en effet sur la figure 1, un réseau de transmission d'informations, désigné par la référence générale 1 sur cette figure, auquel sont reliés au moins deux stations désignées par les références générales 2 et 3 sur cette figure.

Des messages transitent sur ce réseau 1 pour assurer la communication d'informations entre ces stations.

Un tel message est représenté sur la figure 2 et est désigné par la référence générale 4.

De façon classique, un tel message 4 comporte au moins un champ d'en-tête désigné par la référence générale 5 sur cette figure et au moins un champ de données désigné par la référence générale 6.

Dans un procédé de réponse dans une trame de communication, le champ d'en-tête est émis par une première station M1, telle que par exemple par la station 2 représentée sur la figure 1, tandis que le champ de données 6 est émis par une seconde station M2 telle que la station désignée par la référence générale 3 sur la figure 1.

Comme cela est connu dans l'état de la technique, ce procédé de réponse dans la trame permet de réaliser des transmissions d'informations entre stations par des messages qui présentent des formats de trame identiques, que les messages soient émis en totalité par une première station ou en partie par une première station et en partie par une seconde station, la première station émettant dans ce cas le champ d'en-tête et la seconde station émettant le champ de données.

Comme cela a été indiqué précédemment, un tel mécanisme de réponse dans la trame pose un certain nombre de problèmes de mise à jour et de transmission du champ de données.

Pour résoudre ces problèmes, dans le procédé selon l'invention, le champ de données désigné par la référence générale 6 sur la figure 3, comporte un marqueur de fin de champ MFC, désigné par la référence générale 7 sur cette figure et un marqueur de début de champ MDC, désigné par la référence générale 8 sur cette figure, ces marqueurs de champ étant modifiés de façon correspondante, respectivement au début et à la fin d'une opération de mise à jour du reste du champ de données, par la station considérée, pour permettre une validation du message en cas de correspondance entre les deux marqueurs et une invalidation de celui-ci en cas de discordance entre ceux-ci, par exemple pour la première station, lors de la lecture du message et plus particulièrement du champ de données.

Ce procédé est illustré sur les figures 4 et 5.

On peut en effet constaté sur la figure 4 qui illustre une procédure de mise à jour du champ de données d'un message, que cette procédure débute par une étape désignée par la référence générale 10 sur cette figure, dans laquelle la station considérée modifie le marqueur de fin de champ MFC, 7.

Cette modification peut par exemple consister en une incrémentation de ce marqueur MFC.

Une fois ce marqueur incrémenté, il est alors possible à la station de réaliser la mise à jour du reste du champ de données 6 lors d'une étape désignée par la référence générale 11.

Après cette opération de mise à jour, c'est-à-dire à la fin de la procédure de mise à jour du champ de données 6, la station considérée peut alors, lors de l'étape 12, modifier le marqueur de début de champ MDC,8, de façon correspondante à la modification apportée au marqueur de fin de champ MFC.

Cette modification du marqueur de début de champ MDC peut également consister en une incrémentation de celui-ci ou en une simple recopie du marqueur de fin de champ MFC dans ce marqueur de début de champ MDC de manière à ce que ceux-ci contiennent des valeurs correspondantes après l'opération de mise à jour du reste du champ de données.

On conçoit alors que pour permettre une validation ou une invalidation de ce message, par exemple à la lecture de celui-ci, il suffit à la station lisant ce message de réaliser une comparaison de ces marqueurs de début de champ et de fin de champ, comme cela est illustré sur la figure 5, cette comparaison étant désignée par la référence générale 13 sur cette figure.

En cas de correspondance entre ces marqueurs, le message est validé lors de l'étape 14, tandis qu'en cas de discordance entre ces valeurs, le message est invalidé lors de l'étape 15.

Ceci permet alors de résoudre les problèmes évoqués précédemment concernant la transmission d'un message incohérent, dans lequel le champ de données contiendrait des informations mises à jour et d'autres non mises à jour dans le cas où une mise à jour du champ de données se produirait après le début d'une transmission du message sur le réseau.

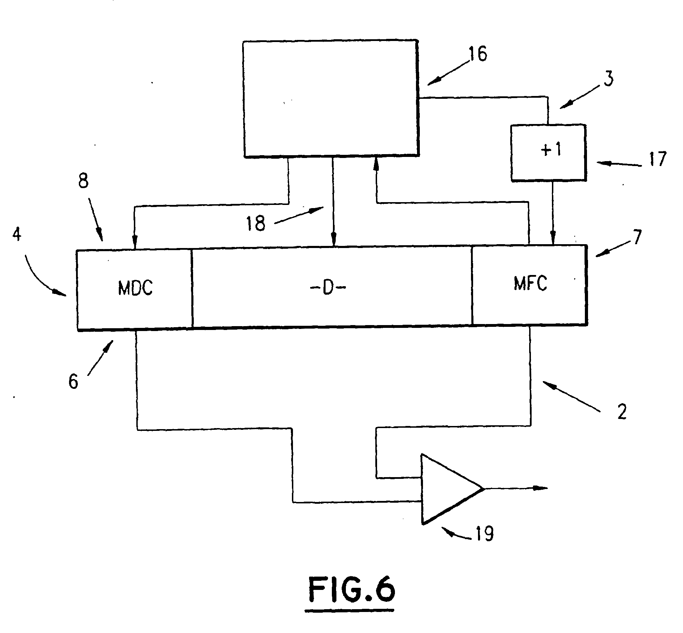

On conçoit alors qu'un procédé selon l'invention peut être mis en oeuvre par un dispositif tel qu'illustré schématiquement sur la figure 6, dans laquelle on a illustré les moyens permettant aux stations 2 et 3 décrites précédemment de remplir les fonctions évoquées.

Dans cet exemple, on considère que le champ de données 6 est produit par la station désignée par la référence générale 3, ce champ de données étant destiné à être lu par la station désignée par la référence générale 2, celle-ci émettant par exemple l'en-tête du message sur le réseau.

Pour des raisons de clarté, on a simplement illustré sur cette figure le champ de données désigné par la référence générale 6 du message désigné par la référence générale 4.

Comme on l'a indiqué précédemment, ce champ de données 6 comporte un marqueur de fin de champ MFC 7 et un marqueur de début de champ MDC 8.

La station désignée par la référence générale 3 comporte alors par exemple une unité centrale de traitement d'informations désignée par la référence générale 16 associée par exemple à un compteur d'incrémentation 17 adapté pour assurer l'incrémentation ou une autre modification du marqueur de fin de champ MFC,7, avant l'opération de mise à jour du reste du champ de données 0 par l'unité centrale 16.

Cette opération de mise à jour du champ de données est illustrée par la flèche d'accès désignée par la référence générale 18 sur cette figure.

Après cette opération de mise à jour, l'unité centrale 16 de la station considérée, est adaptée pour modifier le marqueur de début de champ MDC, 8, de façon correspondante à la modification apportée au marqueur de fin de champ MFC afin que ceux-ci contiennent par exemple la même valeur.

Ainsi qu'on l'a indiqué précédemment, cette modification peut également consister en une incrémentation de ce marqueur de début de champ MDC et dans ce cas, l'unité centrale 16 de la station comporte un autre compteur adapté pour incrémenter ce marqueur de début de champ.

Selon la variante de réalisation représentée sur cette figure, cette modification du marqueur de début de champ consiste en fait en une simple recopie par l'unité centrale 16, du marqueur de fin de champ MFC, tel que modifié, dans le marqueur de début de champ MDC afin de charger dans ceux-ci des valeurs correspondantes.

On notera à cet égard que ce champ de données peut être formé dans un registre quelconque de cette station.

Le champ de données étant destiné à être lu par une station, par exemple 2, celle-ci comporte alors par exemple des moyens de comparaison désignés par la référence générale 19 sur cette figure 6, qui sont adaptés pour comparer à la lecture du message, le marqueur de début de champ et le marqueur de fin de champ pour permettre, en cas de correspondance entre ceux-ci, de valider le message et en cas de discordance entre ceux-ci, d'invalider le message.

On conçoit alors que ce procédé et ce dispositif de validation et d'invalidation permettent de garantir l'analyse d'un message et en particulier d'un champ de données cohérents, car dès qu'une opération de mise à jour du champ de données a débuté et tant qu'elle n'est pas terminée, les marqueurs de fin et de début de champ n'ont pas la même valeur.

Il va de soi que bien que sur la figure 6, on ait représenté des éléments discrets pour réaliser les fonctions décrites, celles-ci peuvent également être mise en oeuvre par programmation des unités centrales des stations de façon classique.

## Revendications

1. Procédé de validation/invalidation d'un message (4) émis sur un réseau de transmission d'informations (1) par réponse dans une trame de communication, entre au moins deux stations (2,3) reliées à ce réseau, le message comportant au moins un champ d'entête (5) émis par une première station (2) et un champ de données (6) émis par une seconde station (3), **caractérisé en ce qu'**il comporte:
- une étape d'émission par la seconde station (3) d'un champ de données (6) comportant un marqueur de fin de champ (7) et un marqueur de début de champ (8) ;
- une étape de modification, de façon correspondante, respectivement au début et à la fin d'une opération de mise à jour (11) du reste du champ de données (6), de ces marqueurs, par la seconde station (3) ; et
- une étape de comparaison, par une station raccordée au réseau et lisant le message, des deux marqueurs (7,8), pour valider le message (4) en cas de correspondance entre ces marqueurs et invalider celui-ci en cas de discordance entre ceux-ci.

2. Procédé selon la revendication 1, **caractérisé en ce que** l'étape de modification des marqueurs consiste en une étape d'incrémentation de ceux-ci, par la seconde station.

3. Procédé selon la revendication 1 ou 2, **caractérisé en ce que** l'étape de modification des marqueurs comporte une étape de modification du marqueur de fin de champ (7) et une étape de recopie du contenu de celui-ci dans le marqueur de début de champ (8), par la seconde station.

4. Réseau de transmission d'informations comportant au moins deux stations (2,3) et sur lequel est émis un message (4) par réponse dans une trame de communication, le message (4) comportant au moins un champ d'entête (5) émis par une première station (2) et un champ de données (6) émis par une seconde station (3), **caractérisé en ce que** la seconde station comporte des moyens d'émission d'un champ de données (6) comportant un marqueur de fin de champ (7) et un marqueur de début de champ (8), et des moyens (16, 17) de modification correspondante de ces marqueurs, respectivement au début et à la fin d'une opération de mise à jour (11) du reste du champ de données et **en ce qu'**une station raccordée au réseau et lisant le message comporte des moyens (19) de comparaison des marqueurs de début de champ et de fin de champ pour valider/invalider le message en cas de concordance/discordance entre tes marqueurs.

5. Réseau selon la revendication 4, **caractérisé en ce que** les moyens de modification des marqueurs de la seconde station comportent des moyens (16,17) d'incrémentation de ceux-ci.

6. Réseau selon la revendication 4 ou 5, **caractérisé en ce que** les moyens de modification des marqueurs de début et de fin de champ de la seconde station comportent des moyens (16,17) de modification du marqueur de fin de champ (7) et des moyens (16) de recopie du contenu de celui-ci dans le marqueur de début de champ (8).

## Patentansprüche

1. Verfahren zum Validieren/Invalidieren einer Nachricht (4), die über ein Informationsübertragungsnetz (1) als Antwort in einem Kommunikationsrahmen zwischen mindestens zwei an dieses Netz angeschlossenen Stationen (2, 3) gesendet wird, wobei die Nachricht mindestens ein von einer ersten Station (2) gesendetes Header-Feld (5) und ein von einer zweiten Station (3) gesendetes Datenfeld (6) aufweist,
**dadurch gekennzeichnet**
**daß** das Verfahren folgende Schritte umfaßt:
- einen Sendeschritt, bei dem von der zweiten Station (3) ein Datenfeld (6) gesendet wird, das eine Feldende-Markierung (7) und eine Feldanfang-Markierung (8) aufweist;
- einen Modifizierungsschritt, bei dem von der zweiten Station (3) in entsprechender Weise diese Markierungen modifiziert werden, und zwar jeweils zu Beginn bzw. am Ende einer Operation (11) zur Aktualisierung des Restes des Datenfeldes (6); und
- einen Vergleichsschritt, bei dem von einer Station, die an das Netz angeschlossen ist und die Nachricht liest, die beiden Markierungen (7, 8) verglichen werden, um die Nachricht für den Fall der Übereinstimmung zwischen den Markierungen zu validieren bzw. die Nachricht für den Fall der Nicht-Übereinstimmung zwischen diesen zu invalidieren.

2. Verfahren nach Anspruch 1,
**dadurch gekennzeichnet,**
**daß** der Modifizierungsschritt zur Modifizierung der Markierungen in einem Schritt der Inkrementierung derselben durch die zweite Station besteht.

3. Verfahren nach Anspruch 1 oder 2,
**dadurch gekennzeichnet,**
**daß** der Modifizierungsschritt zum Modifizieren der Markierungen einen Schritt zum Modifizieren der Feldende-Markierung (7) und einen Schritt zum Kopieren ihres Inhalts in die Feldanfang-Markierung (8) durch die zweite Station aufweist.

4. Informationsübertragungsnetz, das mindestens zwei Stationen (2, 3) aufweist und in welchem eine Nachricht (4) als Antwort in einem Kommunikationsrahmen gesendet wird, wobei die Nachricht (4) mindestens ein von einer ersten Station (2) gesendetes Header-Feld (5) und ein von einer zweiten Station (3) gesendetes Datenfeld (6) aufweist,
**dadurch gekennzeichnet,**
**daß** die zweite Station eine Sendeeinrichtung für ein Datenfeld (6), das eine Feldende-Markierung (7) und eine Feldanfang-Markierung (8) aufweist, sowie eine Modifizierungseinrichtung (16, 17) zur entsprechenden Modifizierung der Markierungen jeweils zu Beginn bzw. am Ende einer Operation (11) zur Aktualisierung des Restes des Datenfeldes aufweist
und **daß** eine Station, die an das Netz angeschlossen ist und die Nachricht liest, eine Vergleichseinrichtung (19) aufweist, um die Feldanfang-Markierungen und die Feldende-Markierungen zu vergleichen, um die Nachricht im Falle der Übereinstimmung bzw. Nicht-Übereinstimmung zwischen diesen Markierungen zu validieren bzw. zu invalidieren.

5. Netz nach Anspruch 4,
**dadurch gekennzeichnet,**
**daß** die Modifizierungseinrichtung der zweiten Station zum Modifizieren der Markierungen eine Einrichtung (16, 17) zum Inkrementieren derselben aufweist.

6. Netz nach Anspruch 4 oder 5,
**dadurch gekennzeichnet,**
**daß** die Modifizierungseinrichtung der zweiten Station zum Modifizieren der Feldanfang-Markierung und der Feldende-Markierung eine Einrichtung (16, 17), um die Feldende-Markierung (7) zu modifizieren, und eine Einrichtung (16) aufweist, um den Inhalt derselben in die Feldanfang-Markierung (8) zu kopieren.

## Claims

1. Method for the validation/invalidation of a message frame (4) sent as a response via a communication network (1) between at least two stations (2, 3) connected to this network, said message comprising at least one head-end field (5) transmitted by a first station (2) and a data field (6) transmitted by a second station (3), **characterised in that** it comprises:
• a step of transmitting a data field (6) comprising an end of field marker (7) and a start of field marker (8) by the second station (3);
• a step of accordingly modifying these markers, respectively at the start and at the end of an updating operation (11) of the rest of the data field (6), by the second station (3), and
• a step of comparing the two markers (7, 8) by a station linked to the network and reading the message to validate the message (4) in the case of conformity between these markers and invalidate this in the case of non-conformity between these.

2. Method according to Claim 1, **characterised in that** the step of modifying the markers consists of a step of incrementing these by the second station.

3. Method according to Claim 1 or 2, **characterised in that** the step of modifying the markers comprises a step of modifying the end of field marker (7) and a step of copying the contents thereof into the start of field marker (8) by the second station.

4. Communication network comprising at least two stations (2, 3) and via which network a message frame (4) is sent as a response, said message (4) comprising at least one head-end field (5) transmitted by a first station (2) and a data field (6) transmitted by a second station (3), **characterised in that** the second station comprises means for transmitting a data field (6) comprising an end of field marker (7) and a start of field marker (8), and means (16, 17) for accordingly modifying these markers respectively at the start and at the end of an updating operation (11) of the rest of the data field, and **in that** a station linked to the network and reading the message comprises means (19) for comparing the start of field and end of field markers to validate/invalidate the message in the case of conformity/non-conformity between the markers.

5. Network according to Claim 4, **characterised in that** the means for modifying the markers of the second station comprise means (16, 17) for incrementing these.

6. Network according to Claim 4 or 5, **characterised in that** the means for modifying the start of field and end of field markers of the second station comprise means (16, 17) for modifying the end of field marker (7) and means (16) for copying the contents thereof into the start of field marker (8).
